# EUROPÄISCHE PATENTSCHRIFT

(11) **EP 1 351 497 B1**
(45) Veröffentlichungstag und Bekanntmachung des Hinweises auf die Patenterteilung: **25.01.2006**
(21) Anmeldenummer: 03004520.7
(22) Anmeldetag: 28.02.2003
(51) Int. Cl.: H04N 5/235

(54) **Festkörpervideokamera mit Helligkeitsregelung**
Solid state video camera with brightness control
Caméra vidéo à état solide avec réglage de luminosité

(30) Priorität: 04.04.2002 DE 10214809
(43) Veröffentlichungstag der Anmeldung: 08.10.2003
(73) Patentinhaber: Richard Wolf GmbH, 75438 Knittlingen (DE)
(72) Erfinder: Dolt, Martin, Dipl.-Phys., 75438 Knittlingen (DE); Vögele, Michael, 75236 Kämpfelbach-Ersingen (DE)
(74) Vertreter: Wilcken, Thomas

(56) Entgegenhaltungen:
- EP-A- 0 964 584
- US-A- 4 929 824
- US-A- 5 416 515
- PATENT ABSTRACTS OF JAPAN vol. 2002, no. 02, 2. April 2002 (2002-04-02) & JP 2001 285684 A (MINOLTA CO LTD), 12. Oktober 2001 (2001-10-12)

## Beschreibung

Die Erfindung betrifff eine Festkörpervideokamera gemäß dem Oberbegriff des Patentanspruches 1.

Bei ungünstigen Lichtverhältnissen in der medizinischen oder technischen Endoskopie wird normalerweise die verwendete endoskopische Festkörpervideokamera aus einem Shuttermodus, in dem die Belichtungszeit der Pixel stufenweise geregelt wird, in einen Gainregelungsmodus wechseln, in dem die Verstärkung der Pixelsignale gesteuert wird. Um in der Gainbetriebsart eine ausreichende Bildhelligkeit zu ermöglichen, sind Verstärkungsfaktoren notwendig, die ein unvermeidliches Bildrauschen zur Folge haben. Dieses Rauschen wirkt sich nachteilig auf die Bildauflösung und Detailerkennbarkeit aus. Außerdem wirkt es extrem störend auf den Anwender.

Um dem entgegenzuwirken, verfügen einige endoskopische Festkörpervideokameras über einen so genannten Bildintegrationsmodus. In diesem Modus wird in einer Videovollbildsequenz (2 Halbbilder à 1 /50 Sekunde) der Bildsensor nicht zweimal, sondern nur einmal ausgelesen, was einer Verdoppelung der Belichtungszeit entspricht. Bei Bedarf kann weiterhin die Belichtungszeit auf ein Mehrfaches dieser Vollbildbelichtungszeit erhöht werden. Diese Vorgehensweise erhöht die Bildhelligkeit je nach Anzahl der integrierten Bilder, ohne den Rauschanteil zu verstärken. Die Bildwiederholrate wird jedoch entsprechend reduziert. Die Reduktion der Bildwiederholfrequenz wirkt sich in zeitlupenartigen Sprüngen in der Bewegung aus, und zum anderen entsteht eine hohe Unschärfe bei bewegten Objekten, wie man es vom Fotografieren mit langen Verschlusszeiten kennt.

Durch die Bildintegration geht somit bei bewegten endoskopischen Sequenzen zeitliche und örtliche Auflösung verloren. Im Extremfall ist eine sinnvolle Endoskopie nicht mehr möglich.

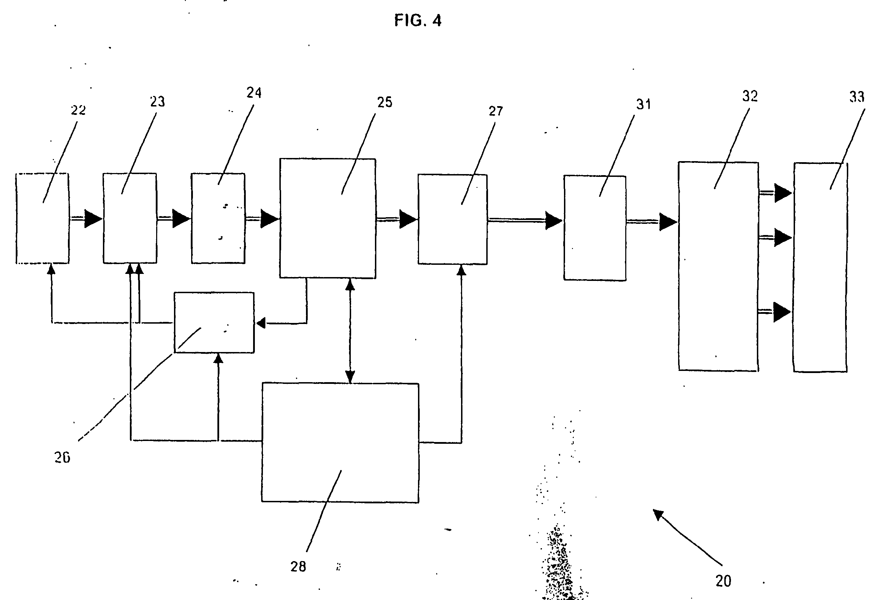

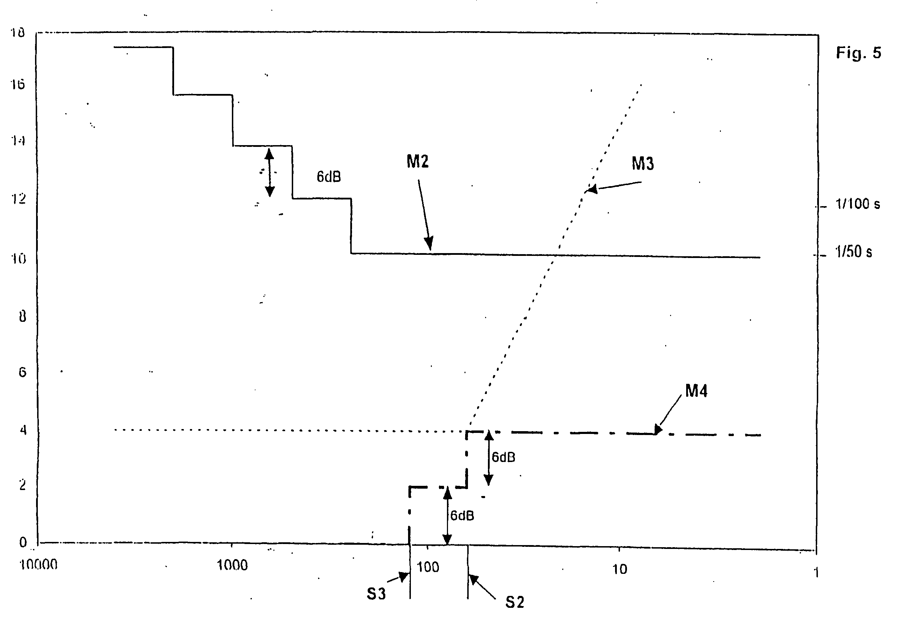

Bezogen auf die beiliegenden Fig. 4 und 5 wird ein Beispiel einer in der medizinischen Endoskopie gebräuchlichen herkömmlichen Festkörpervideokamera und die Funktion ihrer Helligkeitsregelung erläutert. Die in Figur 4 als Blockschaltbild dargestellte und allgemein mit der Bezugszahl 20 bezeichnete herkömmliche Festkörpervideokamera weist einen Bildsensor 22, eine CDS/Gain-Einheit 23, einen A/D-Wandler 24, einen digitalen Signalprozessor 25, eine Zeitsteuereinheit 26, einen Mikrocontroller 28, eine D/A-Wandlereinheit 31, einen Encoder 32 und Ausgangsschaltkreise 33 auf.

Der digitale Signalprozessor 25 der in Fig. 4 dargestellten bekannten Festkörpervideokamera 20 führt eine digitale Videosignalverarbeitung aus. Der Mikrocontroller 28 dient zur Kamerasteuerung und in Kombination mit dem Signalprozessor zur Helligkeitsregelung. Zusätzlich ist in Fig. 4 eine optionale Speichereinheit 27 eingezeichnet. Diese ist notwendig, falls eine Langzeitbelichtung realisiert wird. Der Mikrocontroller 28 steht mit dem digitalen Signalprozessor 25, der Speichereinheit 27, der Zeitsteuereinheit 26 und mit der CDS/Gain-Einheit 23 in Wirkverbindung.

Die Helligkeitsregelung des Videobildes einer Festkörpervideokamera verwendet einen aus einem einstellbaren Messfenster im Videobild durch Mittelwertbildung, Spitzenwerterkennung, Histogrammbewertung oder durch eine Kombination dieser Verfahren gewonnenen Messwert zur Regelung der Bildhelligkeit durch ständigen Vergleich mit einem einstellbaren Sollwert.

Die US-A 5416515 offenbart eine Variante zu dem im vorausgegangenen Absatz beschriebenen Verfahren zur Helligkeitsreglung einer Festkörpervideokamera, bei der mehrere benachbarte Pixel und damit die Bildinformation benachbarter Pixel eines CCD-Bildsensors in fest vorgegebene und Messfenstern zugeordnete Blöcke aufgeteilt und die Helligkeitsinformation blockweise addiert wird. Das Ergebnis für jeden Block wird dann einer CPU zur Steuerung der Belichtung des Bildsensors übergeben. Die CPU wählt die notwendigen Daten aus den Blöcken aus und steuert die Fokussierung einer Bildaufnahmelinse oder berechnet einen fotometrischen Wert zur Steuerung der Belichtung des Bildsensors auf der Basis dieses Wertes.

Eine weitere Variante zu den vorher abgehandelten Verfahren zur Helligkeitsregelung einer Kamera ist in der US-A 4929824 beschrieben. Auch hier wird die Helligkeitsinformation einer CPU und dann einem Bildspeicher zugeführt. Die CPU berechnet die durchschnittliche Helligkeit in einem mehrere benachbarte Pixel des Bildsensors erfassenden ersten Messfenster und ebenfalls die mittlere Helligkeit in einem zweiten sowie gegebenenfalls auch dritten Messfenster bzw. Lichtmessbereich, um durch einen Vergleich der für die jeweiligen Messfenster gewonnenen Helligkeitswerte zu ermitteln, ob und wie die Belichtung des Bildsensors etwa durch Steuerung einer Blende erforderlichenfalls geregelt bzw. geändert werden muss.

Bei allen diesen bekannten Verfahren erfolgt ein "Pixeladditionsmodus" auf der Basis eines bleibend fest vorgegebenen und Pixel in Blöcke zusammenfassenden Algorithmus. Außerdem ist die Pixeladdition kein eigenständiger Regelungsmodus für die Bildhelligkeit. Es wird also nicht das Bild bzw. die Bildhelligkeit in Richtung auf einen Sollwert geändert, sondern über aus den Helligkeitsinformationen gewonnene Messwerte nur die Belichtung des Bildsensors beeinflusst und gesteuert, wie es übrigens bei Fotokameras allgemein üblich ist.

Das in Fig. 5 dargestellte Diagramm zeigt schematisch und graphisch den Ablauf einer Helligkeitsregelung einer herkömmlichen endoskopischen Kamera mit drei Regelungsmodi M2, M3 und M4 für die Bildhelligkeit. Auf der linken vertikalen Achse des Diagramms sind beispielhafte Verstärkungsfaktoren und auf der rechten vertikalen Achse Shutterzeiten aufgetragen. Die horizontale Achse gibt die (gemessenen) Objekthelligkeiten in relativen Einheiten an.

Die durch eine ausgezogene Linie dargestellte Treppenfunktion ist die Regelungsfunktion im Shuttermodus M2. Die stufenweise Shutterregelung erfolgt beispielsweise in 6dB-Schritten. Die Treppenfunktion des Shuttermodus M2 geht von hoher Objekthelligkeit mit kurzer Shutterzeit im linken Bildteil bis zur löngsten Shutterzeit 1 /50 s (bei NTSC-Norm 1 /60 s). Eine weitere Verlängerung der Shutterzeit ist bei herkömmlichen Videokameras nicht möglich.

Damit die Dynamik weiter erhöht werden kann, setzt ab einem Schwellwert S2 der Objekthelligkeit die Verstärkung der Kamera ein. Dieser so genannte Gainregelungsmodus M3 ist durch eine punktierte Linie in Fig. 5 eingezeichnet. Als Option kann, was in Fig. 5 bereits eingezeichnet ist, zuvor bei einem höheren Schwellwert S3 der Objekthelligkeit ein Bildintegrationsmodus eingeschaltet werden. Dieser Helligkeitsregelungsmodus M4 ist durch eine strichpunktierte Linie in Fig. 5 veranschaulicht. Die Bildintegration erfolgt in 6dB-Stufen. In dem in Fig. 5 gezeigten Diagramm ist die Bildintegration durch den Regelungsmodus M4 beispielhaft auf vier Bilder begrenzt. Dann beginnt die Verstärkungsfunktion gemäß dem Helligkeitsregelungsmodus M3 einzusetzen.

In Fig. 5 nicht dargestellt ist eine an sich bekannte Kombination aus einem Shuttermodus M2 und einem Gainregelungsmodus M3, wobei die durch die Shutterregelung im Regelungsmodus M2 entstehenden Helligkeitssprünge durch eine Verstärkungsregelung im Regelungsmodus M3 kompensiert werden. Es ist ebenfalls bekannt, die einzelnen Betriebsarten an Übergangspunkten fließend ineinander übergehen zu lassen.

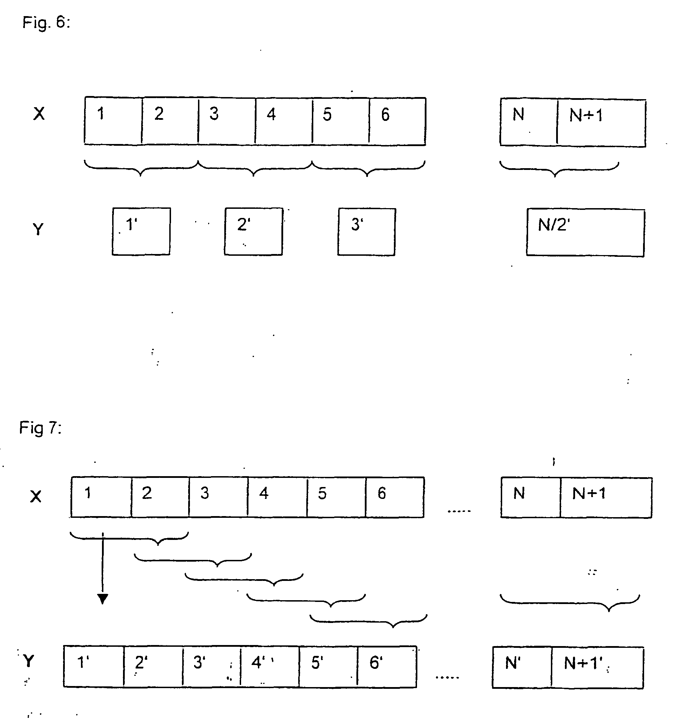

Bekannt sind auch Festkörpervideokameras mit einem zur Erhöhung der Bildhelligkeit angewendeten Pixeladditionsmodus, bei dem nach einem Additionsalgorithmus Helligkeitswerte benachbarter Pixel des Bildsensors addiert und einem Pixel zugeordnet werden. Es handelt sich hierbei um das so genannte "Pixel-Binning", auf das noch später im Zusammenhang mit der Fig. 6 eingegangen wird, wo auch dargelegt wird, weshalb dieses statische Verfahren zwar zu einer Erhöhung der Bildhelligkeit, aber je nach Anzahl der jeweils in einem Additionsschritt addierten Signale benachbarter Pixel zu einer beträchtlichen Reduzierung der Bildauflösung führt, und zwar um einen jeweils der Anzahl der zusammengefassten Pixel entsprechenden Faktor. Außerdem handelt es sich beim bekannten "Pixel-Binning" um einen statischen Vorgang, der nicht in Wirkverbindung mit sonstigen Helligkeitsregelungsmodi der Videokamera steht.

Die Aufgabe der Erfindung besteht darin, eine zur medizinischen und technischen Endoskopie geeignete Festkörpervideokamera vorzuschlagen, bei der außer sonstigen Regelungsmodi M, nämlich u. a. ein Shuttermodus als Regelungsmodus M2, ein Pixeladditionsmodus als weiterer Regelungsmodus M1 zur Anwendung kommt, der eine dynamische Anpassung an den Sollwert der Bildhelligkeit ermöglicht und trotz der Addition von Signalen benachbarter Pixel zu einer vergleichsweisen hohen, jedenfalls nur geringfügig unterhalb der Auflösung des Originalbildes liegenden Auflösung führt. Außerdem sollen die vorher erwähnten Nachteile des gegebenenfalls zur Anwendung kommenden Bildintegrationsmodus und die Erhöhung des Rauschanteils beim Gainregelungsmodus vermieden werden.

Diese Aufgabe wird durch die im Anspruch 1 angegebenen Merkmale gelöst. Weitere vorteilhafte Merkmale sind in den Unteransprüchen angegeben.

Zur Steigerung der Bildhelligkeit bzw. der Empfindlichkeit der endoskopischen Festkörpervideokamera wird die Helligkeitsinformation benachbarter Pixel zusammengefasst und einem Pixel zugeordnet. Dies erhöht die Bildhelligkeit und reduziert zusätzlich den Rauschanteil in diesem Pixel. Dazu wird vorgeschlagen, diesen Pixeladditionsmodus mit der Verstärkungsregelung der Kamera derart zu koppeln, dass die Verstärkungsregelung jeweils die Helligkeitssprünge, die durch die Pixeladdition entstehen, kompensiert und dadurch für den Anwender einen fließenden Übergang ohne merkliche Helligkeitssprünge schafft.

Gemäß der Erfindung wird die Verstärkung beim Sprung in den Additionsbetrieb reduziert, was zusätzlich zum rauschmindernden Effekt der Addition das Bildrauschen reduziert und somit die Bildqualität weiter verbessert.

Auch bei dem unter Pixel-Binning" bekannten Helligkeitsanhebungsmodus, der bei Progressiv-Scan-Kameras und auch bei CMOS-Kameras zur Empfindlichkeitssteigerung eingesetzt wird, wird die Information mehrerer Pixel z.B. in horizontaler oder vertikaler Richtung zusammengefasst und einem neuen Pixel zugeordnet. Die resultierende Pixelmatrix ist aber im Vergleich zur Originalmatrix entsprechend der Addition kleiner und weist eine geringere Auflösung auf. Außerdem ist das bekannte "Pixel-Binning"-Verfahren statisch, d.h. es kann zwar ein- oder ausgeschaltet werden, ist aber nicht in einen Regelalgorithmus der Kamera integriert.

Eine beispielhafte Ausführung dieser bekannten "Pixel-Binning"-Funktion mit bleibend fest vorgegebenen Pixelpaarungen ist in der Fig. 6 dargestellt. Hierbei stellt die Zeile X beispielhaft eine Bildzeile der Original-Sensorinformation und die Zeile Y eine daraus über ein2-Pixel-Binning ermittelte Bildzeile dar. Offensichtlich wird durch dieses Verfahren die Auflösung des Bildes halbiert.

Im Unterschied hierzu wird in der erfindungsgemäßen Ausführung ein gleitender Pixeladditionsalgorithmus eingesetzt, der nicht starr Pixelgruppen addiert, sondern im pixelweisen Ablauf der Signalverarbeitung zwei oder mehr benachbarte Pixel zusammenfasst. Hierzu ist ohne Beschränkung der Allgemeingültigkeit eine beispielhafte Ausführung für eine 2-er Pixeladdition in Fig. 7 dargestellt. Wesentlicher Vorteil dieser Ausführungsform ist, dass die aus dieser Vorgehensweise resultierende Auflösung nur geringfügig unter der Original-Bildauflösung liegt, während der volle Effekt der Bildhelligkeitsanhebung erreicht wird.

Die nachfolgende Beschreibung behandelt unter Bezug auf die beiliegende Zeichnung ein bevorzugtes Ausführungsbeispiel der Erfindung sowie vorteilhafte Weiterbildungen davon.

In der Zeichnung zeigen:
- Fig. 1: ein Blockschaltbild einer erfindungsgemäßen Festkörpervideokamera, die eine von einem Mikrocontroller gesteuerte Pixeladditionslogik aufweist,
- Fig. 2: graphisch eine schematische Darstellung des Ablaufs der Helligkeitsregelung bei einer Festkörpervideokamera gemäß Fig. 1,
- Fig. 3: graphisch und schematisch eine vorteilhafte Weiterbildung der Helligkeitsregelung, die die Verstärkungsregelung mit einer Shutterregelung, der Pixeladdition und der optionalen Langzeitbe- lichtung derart kombiniert, dass ein kontinuierlich geregelter Helligkeitsübergang realisiert ist,
- Fig. 4: als Blockschaltbild die bereits beschriebene bekannte Festkörpervideokamera.
- Fig. 5: graphisch und schematisch den bereits beschriebenen Ablauf der Helligkeitsregelung der in Fig. 4 gezeigten Festkörpervideokamera,
- Fig. 6: das schon vorher beschriebene Beispiel für eine bekannte "Pixel-Binning"-Funktion und
- Fig. 7: eine ebenfalls schon vorab beschriebene 2-er Pixeladdition nach der Erfindung.

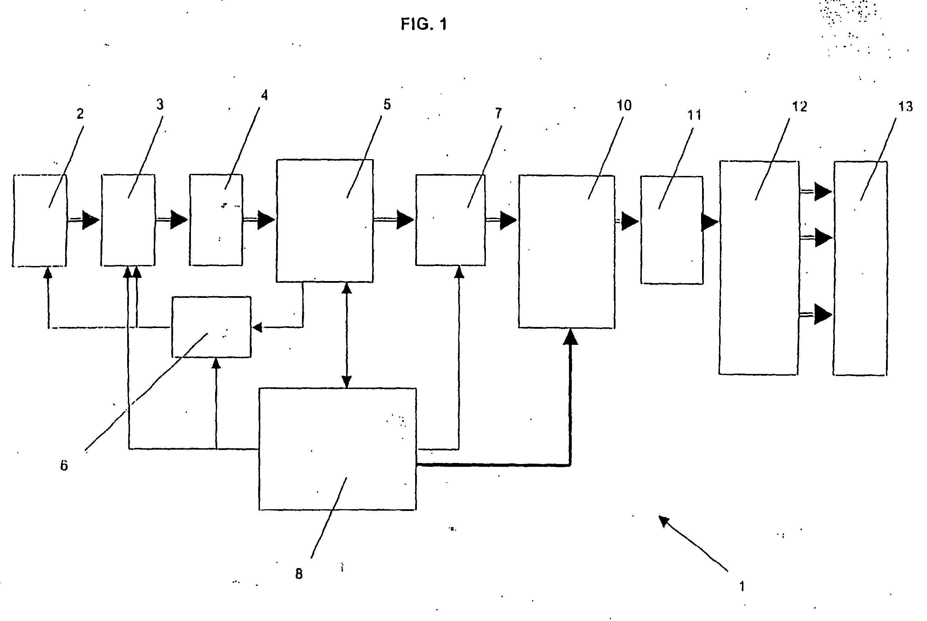

Zunächst wird Bezug auf das in Fig. 1 gezeigte Blockschaltbild genommen, das schematisch eine allgemein mit der Bezugsziffer 1 bezeichnete, bevorzugte Ausführungsform einer erfindungsgemäßen Festkörper videokamera zeigt. Darin entsprechen die Einheiten 2-8 und 11-13 jeweils den bereits beschriebenen Blöcken 22-28 und 31-33 der herkömmlichen, in Fig. 4 dargestellten Festkörpervideokamera 20.

Zusätzlich zu der in Fig. 4 dargestellten Struktur weist die in Fig. 1 dargestellte erfindungsgemäße Festkörpervideokamera 1 eine vom Mikrocontroller 8 gesteuerte Pixeladditionslogik 10 auf. Die Ansteuerung dieser Pixeladditionslogik 10 wird vom Mikrocontroller 8 in den Regelablauf der Kamera integriert. Die in der Festkörpervideokamera 1 integrierten und kombinierten Regelungsmodi, wie der Pixeladditionsmodus M1, der Shuttermodus M2, der Gainregelungsmodus M3 und der optionale Bildintegrationsmodus M4 sind durch im Mikrocontroller 8 implementierte Regelalgorithmen bzw. -programme realisiert. Der Mikrocontroller 8 steht dafür mit der CDS/Gain-Einheit 3, dem digitalen Signalprozessor 5, der Zeitsteuereinheit 6 und mit der Pixeladditionslogik 10 in Wirkverbindung. In Fig. 1 wird weiterhin gezeigt, dass die optional vorgesehene Bildspeichereinheit 7 vom Mikrocontroller 8 gesteuert wird.

Die im Mikrocontroller 8 implementierte Helligkeitsregelungseinheit ermöglicht in Kooperation mit der CDS/Gain-Einheit 3, der Zeitsteuereinheit 6, dem digitalen Signalprozessor 5 und der Pixeladditionslogik 10 den Pixeladditionsmodus als ersten Regelungsmodus M 1.

Die erwähnte Helligkeitsregelungseinheit führt weiterhin einen zweiten Regelungsmodus M2, nämlich den Shuttermodus, aus, der die Belichtungszeit der Pixel in vorbestimmten Zeitstufen steuert. Die Helligkeitsregelungseinheit aktiviert automatisch die Pixeladditionslogik 10, wenn die gemessene Objekthelligkeit bei der längstmöglichen Shutterzeit (z.B 1 /50 s) des Shuttermodus M2 einen ersten Schwellwert S1 unterschreitet.

Weiterhin aktiviert die Helligkeitsregelungseinheit einen dritten Regelungsmodus M3, nämlich den Gainregelungsmodus, wenn das gemessene Objekthelligkeitssignal nach der Aktivierung der Pixeladditionslogik 10 einen zweiten Schwellwert S2 unterschreitet, der kleiner ist als der erste Schwellwert S1.

Optional aktiviert die Helligkeitsregelungseinheit den Bildintegrationsmodus als vierten Regelungsmodus M4, wenn das gemessene Objekthelligkeitssignal nach der Aktivierung der Pixeladditionslogik 10 einen dritten Schwellwert S3 unterschreitet, der zwischen dem ersten und zweiten Schwellwert S1 und S2 liegt.

In einer vorteilhaften Weiterbildung ist die Anzahl der Additionsstufen der Pixeladditionslogik 10 einstellbar, und die Helligkeitsregelungseinheit aktiviert im ersten Regelungsmodus M1 jeweils die an der Videokamera 1 einstellbaren Additionsstufen.

Außerdem ist die Reihenfolge der ersten bis vierten Regelungsmodi M1 bis M4 an der Videokamera 1 einstellbar. Alternativ kann auch der als dritter Regelungsmodus M3 vorgesehene Bildintegrationsmodus vor dem als ersten Regelungsmodus M1 vorgesehenen Pixeladditionsmodus eingeschaltet oder aktiviert werden. Auf den Bildintegrationsmodus kann alternativ auch gänzlich verzichtet werden.

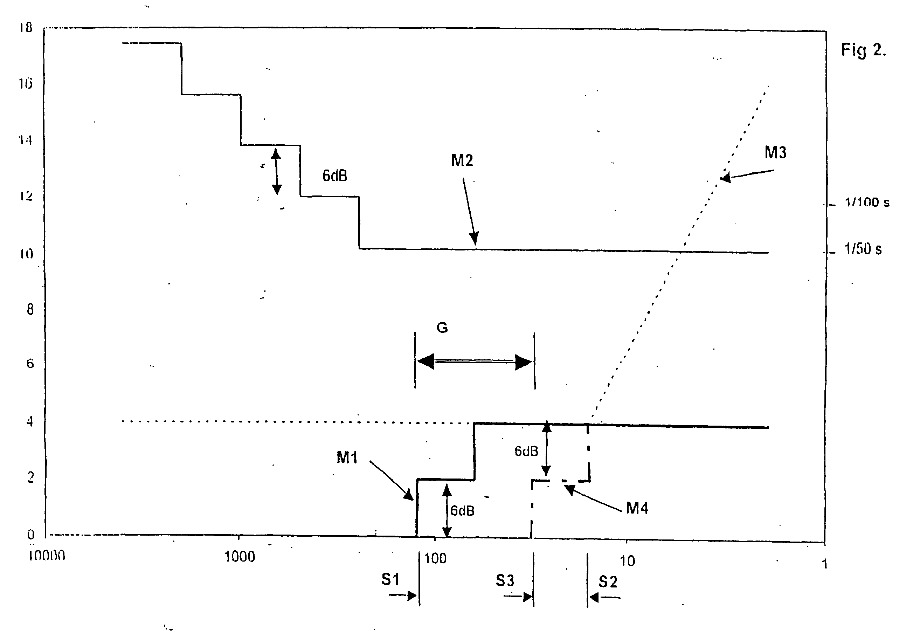

Das Diagramm in Fig. 2 zeigt graphisch und beispielhaft den Ablauf einer erfindungsgemäßen Helligkeitsregelung, die auch die optionale Bildintegration enthält. Wie in der bereits erläuterten Graphik der Fig. 5 sind auf der linken vertikalen Achse Verstärkungsfaktoren und auf der rechten vertikalen Achse Shutterzeiten aufgetragen. Die horizontale Achse gibt die Objekthelligkeit in relativen Einheiten an.

So, wie bei dem in Fig. 5 erläuterten und bekannten Verfahren wird mit abnehmender Objekthelligkeit zunächst, wie in Fig. 2 der ausgezogene Graph M2 angibt, die Shutterzeit stufenweise verlängert. Die 6dB-Stufen sind dabei lediglich beispielhaft. Wenn die gemessene Objekthelligkeit, nachdem die Shutterzeit nicht mehr verlängert werden kann (längste Shutterzeit 1/50 bzw. 1 /60 s), weiterhin abnimmt und die Objekthelligkeit einen ersten Schwellwert S1 unterschreitet, aktiviert die Helligkeitsregelungseinheit, d.h. der Mikrocontroller 8, den Pixeladditionsmodus, dessen Funktion mit dem ausgezogenen Graphen M1 dargestellt ist. Die Aktivierung des Pixeladditionsmodus erfolgt vor dem Zuschalten des Bildintegrationsmodus. Hier sind als Beispiel zwei Pixeladditionsstufen gezeigt, die jeweils eine Erhöhung der Bildhelligkeit um 6dB bewirken. Der Gewinn des Dynamikumfangs, in dem sogar eine Reduktion des Rauschanteils erreicht ist, ist als Doppelpfeil G eingetragen.

Falls die gemessene Objekthelligkeit weiter abnimmt, setzt, nachdem sie einen zweiten Schwellwert S2 unterschritten hat, der Gainregelungsmodus M3 ein (einfach gestrichelte Linie in Fig. 2). Optional kann hier vor der Aktivierung des Gainregelungsmodus M3 der Bildintegrationsmodus (strichpunktiert gezeigter Graph M4) aktiviert werden, wenn die Objekthelligkeit einen dritten Schwellwert S3 unterschreitet, der zwischen dem ersten Schwellwert S1 und dem zweiten Schwellwert S2 liegt.

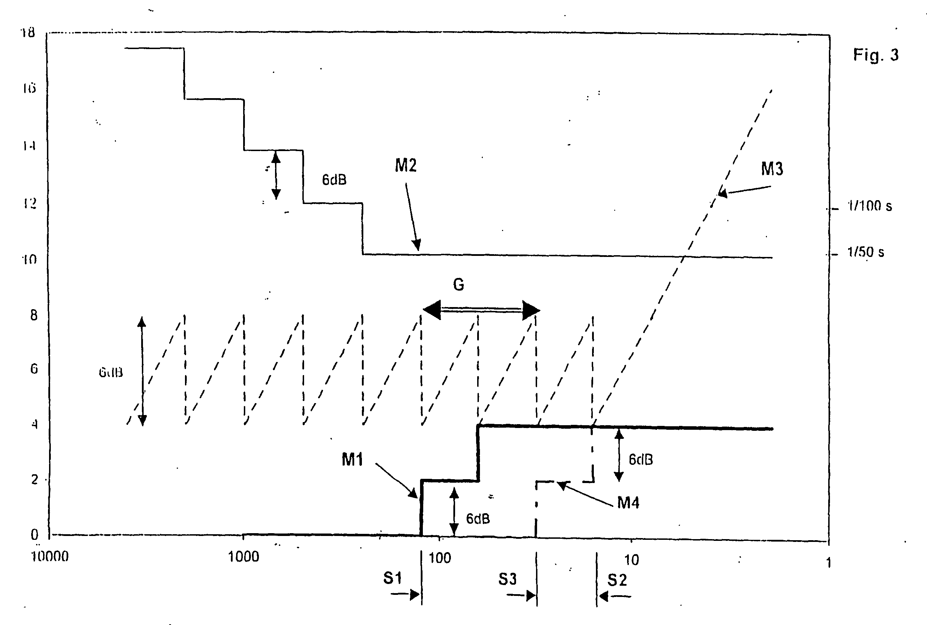

Das Verfahren, jeweils durch eine sögezahnförmige Anpassung des Verstärkungsfaktors durch die Gainregelung Helligkeitssprünge auszugleichen, ist gemäß der in Fig. 3 dargestellten vorteilhaften Weiterbildung der erfindungsgemäßen Helligkeitsregelung noch verbessert. In dieser optimierten Ausführung ist der durch den einfach gestrichelten Graph dargestellte Gainregelungsmodus M3 mit dem durch den ausgezogenen Graph dargestellten Shutterregelungsmodus M2 und dem Regelungsmodus M1 durch Pixeladdition sowie optional mit dem Regelungsmodus M4 durch Bildintegration derart kombiniert, dass zwischen den Helligkeitssprüngen, die durch die Umschaltung der Shutterstufen, Additionsstufen und Bildintegrationsstufen entstehen würden, eine kontinuierliche Verstärkungsfunktion geregelt wird. Durch diese Maßnahme wird eine besonders feine, stufenlose Regelung der Bildhelligkeit über den gesamten Dynamikbereich erreicht.

## Patentansprüche

1. Festkörpervideokamera (1) mit einem Bildsensor (22) und mit einer Helligkeitsregelungseinheit (8), die auf der Basis eines Kameraregelalgorithmus arbeitet und auf der Basis eines am Video gemessenen Helligkeitssignals die Bildhelligkeit auf einen Helligkeitssollwert hin regelt und mindestens zwei Helligkeitsregelungsmodi M aufweist, nämlich einen Shuttermodus als Regelungsmodus M2 für die Belichtungszeit des Bildsensors (22) und einen Pixeladditionsmodus als Regelungsmodus M 1, für den die Videokamera (1) eine die Helligkeitssignale mehrerer benachbarter Pixel des Bildsensors (22) gemäß einem Pixeladditionsalgorithmus addierende Pixeladditionslogik (10) aufweist, mit der im pixelweisen Ablauf der Signalverarbeitung einer Bildzeile die Helligkeitssignale jeweils mindestens zweier benachbarter Pixel in jeweils einem Additionsschritt zusammengefasst und einem Pixel zugeordnet werden, **dadurch gekennzeichnet, dass** der Pixeladditionsalgorithmus als gleitender Algorithmus ausgeführt ist und dass die Pixeladditionslogik (10) in Wirkverbindung mit der Helligkeitsregelungseinheit (8) steht und der Pixeladditionsmodus M1 in die Helligkeitsregelung der Videokamera (1) integriert ist.

2. Festkörpervideokamera nach Anspruch 1, **dadurch gekennzeichnet, dass** die Helligkeitsregelungseinheit (8) die Helligkeitsregelungsmodi M derart kombiniert, dass Helligkeitssprünge beim Übergang der Modi ineinander und/oder innerhalb der Regelungsmodi M selbst vermieden werden.

3. Festkörpervideokamera nach einem der Ansprüche 1 und 2, **dadurch gekennzeichnet, dass** die Helligkeitsregelungseinheit (8) automatisch die Pixeladditionslogik (10) aktiviert, wenn das gemessene Helligkeitssignal der längstmöglichen Shutterzeit im Regelungsmodus M2 einen ersten Schwellwert S1 unterschreitet.

4. Festkörpervideokamera nach Anspruch 3, **dadurch gekennzeichnet, dass** die Helligkeitsregelungseinheit (8) einen weiteren Regelungsmodus M3 als Gainregelung aufweist und diese aktiviert, wenn das gemessene Helligkeitssignal nach der Aktivierung der Pixeladditionslogik (10) einen zweiten Schwellwert S2 unterschreitet, der kleiner ist als der erste Schwellwert S1.

5. Festkörpervideokamera nach Anspruch 4, **dadurch gekennzeichnet, dass** die Helligkeitsregelungseinheit (8) als weiteren Regelungsmodus M4 eine Bildintegration aufweist und diese aktiviert, wenn das gemessene Helligkeitssignal nach Aktivierung der Pixeladditionslogik (10) einen dritten Schwellwert S3 unterschreitet, wobei der dritte Schwellwert S3 zwischen dem ersten Schwellwert S1 und dem zweiten Schwellwert S2 liegt.

6. Festkörpervideokamera nach einem der Ansprüche 1 bis 5, **dadurch gekennzeichnet, dass** die Anzahl der von der Helligkeitsregelungseinheit (8) im Regelungsmodus M1 aktivierten Additionsstufen an der Videokamera (1) einstellbar ist.

7. Festkörpervideokamera nach einem der Ansprüche 1 bis 6, **dadurch gekennzeichnet, dass** sie einen die Helligkeitsregelungseinheit (8) steuernden Mikrocontroller aufweist.

8. Festkörpervideokamera nach einem der Ansprüche 1 bis 7, **dadurch gekennzeichnet, dass** sie einen Bildspeicher (7) zur Ausführung von Langzeitbelichtungen aufweist.

9. Festkörpervideokamera nach Anspruch 8, **dadurch gekennzeichnet, dass** die Pixeladditionslogik (10) dem Bildspeicher (7) im Weg des Videosignals nachgeschaltet ist.

10. Festkörpervideokamera nach einem der Ansprüche 1 bis 9, **dadurch gekennzeichnet, dass** die Bildhelligkeit im Regelungsmodus M2 durch eine stufenweise Verstellung der Belichtungszeit der Pixel geregelt wird.

## Claims

1. A solid-state video camera (1) with a picture sensor (22) and with a brightness control unit (8) which functions on the basis of a camera control algorithm, and controls the picture brightness to a brightness nominal value on the basis of a brightness signal measured at the video, and comprises at least two brightness control modes M, specifically a shutter mode as a control mode M2 for the exposure time of the picture sensor (22), and a pixel addition mode as a control mode M1, for which the video camera (1) comprises pixel addition logics (10) which add the brightness signals of several adjacent pixels of the picture sensor (22) according to a pixel addition algorithm and with which in the pixelwise course of the signal processing of a picture line, the brightness signals in each case of at least two adjacent pixels are grouped together in each case in one addition step and are allocated to a pixel, **characterised in that** the pixel addition algorithm is designed as a floating algorithm, and that the pixel addition logics (10) are in active connection with the brightness control unit (8), and the pixel addition mode M1 is integrated into the brightness control of the video camera (1).

2. A solid-state video camera according to claim 1, **characterised in that** the brightness control unit (8) combines the brightness control modes M in a manner such that with the transition of the modes into one another and/or within the control modes M themselves, jumps in brightness are avoided.

3. A solid-state video camera according to one of the claims 1 and 2, **characterised in that** the brightness control unit (8) automatically activates the pixel addition logics (10) when the measured brightness signal of the longest possible shutter time in the control mode M2 falls short of a first threshold value S1.

4. A solid-state video camera according to claim 3, **characterised in that** the brightness control unit (8) has a further control mode M3 as a gain control and activates this when the measured brightness signal after activation of the pixel addition logics (10) falls short of a second threshold value S2 which is smaller than the first threshold value S1.

5. A solid-state video camera according claim 4, **characterised in that** the brightness control unit (8) as a further control mode M4 has a picture integration and activates this when the measured brightness signal after activation of the pixel addition logics (10) falls short of a third threshold value S3, wherein the third threshold value S3 lies between the first threshold value S1 and the second threshold value S2.

6. A solid-state video camera according to one of claims 1 to 5, **characterised in that** the number of the addition steps activated by the brightness control unit (8) in the control mode M1 may be set on the video camera (1).

7. A solid-state video camera according to one of the claims 1 to 6, **characterised in that** it comprises a micro-controller controlling the brightness control unit (8).

8. A solid-state video camera according to one of the claims 1 to 7, **characterised in that** it comprises a picture memory (7) for carrying out long-term exposures.

9. A solid-state video camera according to claim 8, **characterised in that** the pixel addition logics (10) are connected after the picture memory (7) in the path of the video signal.

10. A solid-state video camera according to one of the claims 1 to 9, **characterised in that** the picture brightness in the control mode M2 is controlled by a stepwise adjustment of the exposure time of the pixels.

## Revendications

1. Caméra vidéo à solide (1) comprenant un capteur d'images (22) et une unité de réglage de luminosité (8), qui opère sur la base d'un algorithme de mise au point de caméra et règle la luminosité des images sur une valeur prescrite de luminosité, sur la base d'un signal de luminosité mesuré sur la vidéo, et qui présente au moins deux modes de réglage de luminosité M, à savoir un mode de commande d'obturateur comme mode de réglage M2, pour la durée d'exposition à la lumière du capteur d'images (22), et un mode d'addition de pixels comme mode de réglage M1, pour lequel la caméra vidéo (1) présente un circuit logique d'addition de pixels (10) qui additionne les signaux de luminosité de plusieurs pixels voisins du capteur d'images (22), conformément à un algorithme d'addition de pixels, et à l'aide duquel, au cours du traitement de signal, pixel par pixel, d'une ligne d'image, les signaux de luminosité respectifs d'au moins deux pixels voisins sont rassemblés et sont associés à un pixel, dans un pas d'addition respectif, **caractérisée en ce que** l'algorithme d'addition de pixels est élaboré sous forme d'un algorithme glissant et **en ce que** le circuit logique d'addition de pixels (10) se trouve en liaison de coopération avec l'unité de réglage de luminosité (8) et le mode d'addition de pixels M1 est intégré dans le réglage de luminosité de la caméra vidéo (1) .

2. Caméra vidéo à solide selon la revendication 1, **caractérisée en ce que** l'unité de réglage de luminosité (8) combine les modes de réglage de luminosité M d'une manière telle, que des sauts de luminosité soient évités lors du passage d'un mode dans un autre et/ou à l'intérieur même des modes de réglage M.

3. Caméra vidéo à solide selon l'une des revendications 1 et 2, **caractérisée en ce que** l'unité de réglage de luminosité (8) active automatiquement le circuit logique d'addition de pixels (10) lorsque le signal de luminosité mesuré de la durée d'ouverture d'obturateur la plus longue possible, dans le mode de réglage M2, passe en dessous d'une première valeur de seuil S1.

4. Caméra vidéo à solide selon la revendication 3, **caractérisée en ce que** l'unité de réglage de luminosité (8) présente un mode de réglage supplémentaire M3, sous forme d'un réglage de gain, et l'active lorsque le signal de luminosité mesuré, après l'activation du circuit logique d'addition de pixels (10), passe en dessous d'une deuxième valeur de seuil S2, qui est inférieure à la première valeur de seuil S1.

5. Caméra vidéo à solide selon la revendication 4, **caractérisée en ce que** l'unité de réglage de luminosité (8) présente, en tant que mode de réglage supplémentaire M4, une intégration d'image et l'active lorsque le signal de luminosité mesuré, après l'activation du circuit logique d'addition de pixels (10), passe en dessous d'une troisième valeur de seuil S3, la troisième valeur de seuil S3 se situant entre la première valeur de seuil S1 et la deuxième valeur de seuil S2.

6. Caméra vidéo à solide selon l'une des revendications 1 à 5, **caractérisée en ce que** le nombre des étapes d'addition activées par l'unité de réglage de luminosité (8) dans le mode de réglage M1 est ajustable sur la caméra vidéo (1).

7. Caméra vidéo à solide selon l'une des revendications 1 à 6, **caractérisée en ce qu'**elle comporte un micro-régisseur commandant l'unité de réglage de luminosité (8).

8. Caméra vidéo à solide selon l'une des revendications 1 à 7, **caractérisée en ce qu'**elle comporte une mémoire d'images (7) pour la mise en oeuvre d'expositions de longue durée à la lumière.

9. Caméra vidéo à solide selon la revendication 8, **caractérisée en ce que** le circuit logique d'addition de pixels (10) est monté en aval de la mémoire d'images (7) dans le trajet du signal vidéo.

10. Caméra vidéo à solide selon l'une des revendications 1 à 9, **caractérisée en ce que** la luminosité des images est réglée, dans le mode de réglage M2, au moyen d'un ajustement par paliers de la durée d'exposition à la lumière des pixels.
